# FASCICULE DE BREVET EUROPEEN

(11) **EP 2 221 518 B1**
(45) Date de publication et mention de la délivrance du brevet: **20.04.2016**
(21) Numéro de dépôt: 10290048.7
(22) Date de dépôt: 03.02.2010
(51) Int. Cl.: F16L 3/127, F16L 3/13, F16L 3/26, H02G 3/04, H02G 3/32, F16L 3/123

(54) **Pièce de fixation d'un tronçon de chemin de cables en treillis de fils sur un bras de console**
Verbindungselement eines Abschnitts eines Kabelkanals aus Drahtgitter auf einer armförmigen Konsole
Fixation piece of a cable road section made of wire mesh on a bracket arm

(30) Priorité: 13.02.2009 FR 0900672
(43) Date de publication de la demande: 25.08.2010
(73) Titulaire: Niedax France, 62400 Béthune (FR)
(72) Inventeur: Witkowski, Nicolas, 67210 Obernai (FR)
(74) Mandataire: Demulsant, Xavier

(56) Documents cités:
- DE-B3-102007 011 194
- FR-A1- 2 894 726
- JP-A- 2002 021 831
- US-A- 3 252 677
- US-A- 3 441 986
- US-A- 3 501 117
- US-A- 4 467 987
- US-A1- 2002 190 166
- US-A1- 2003 213 876
- US-B1- 6 315 249

## Description

L'invention a trait à la fixation des chemins de câbles sur un support, et plus particulièrement des chemins de câbles en treillis de fils sur un bras de console de supportage.

Les chemins de câbles sont des structures permettant de supporter, aussi bien dans une configuration verticale qu'horizontale, notamment des câbles électriques, des câbles téléphoniques, des câbles de fibres optiques, des câbles de réseau informatique ou encore des canalisations.

Un chemin de câble comprend conventionnellement un fond et deux ailes latérales, la section formant en général un U, bien qu'il existe d'autres formes, par exemple en G comme cela est présenté dans le document WO 2007 068 813.

Eventuellement, les chemins de câbles sont équipés d'accessoires, par exemple de colliers enserrant les câbles et les maintenant contre le chemin de câbles, ou encore de séparateurs réalisant dans un même chemin plusieurs compartiments, permettant la séparation physique de câbles de nature différente. Un couvercle est parfois fixé de manière à fermer le chemin de câbles, conférant une certaine protection des câbles par rapport à des corps étrangers, par exemple la poussière.

Les chemins de câbles sont réalisés de manières variées. Principalement, les chemins de câbles sont réalisés à partir de tablettes pleines pliées, de tablettes comportant des ouvertures ou encore à partir de fils organisés en treillis.

Le treillis de fils est obtenu typiquement en soudant à plat des fils longitudinaux, appelés fils de chaine, parallèles les uns aux autres, à des fils transversaux, appelés fils de trame, placés de manière sensiblement perpendiculaire aux fils de chaine, et qui sont généralement plus courts que les fils de chaine. De manière générale, les fils sont régulièrement espacés les uns par rapport aux autres. Toutefois, les fils de chaine peuvent par exemple être regroupés sur le fond ou sur les ailes latérales du chemin de câbles.

Les fils de trame sont ensuite courbés de sorte que la section prenne la forme voulue. Les fils de chaine peuvent s'étendre de manière sensiblement rectiligne de façon à fournir un chemin de câbles droit, ou ils peuvent être courbés, formant un coude.

Dans un chemin de câbles, les fils peuvent être de section circulaire, ou polygonale, et ne sont pas obligatoirement tous de même forme, section, ou dimension.

Les chemins de câbles se présentent conventionnellement en forme de tronçons, aboutés les uns aux autres. Les tronçons peuvent être coudés. La longueur conventionnelle pour de tels tronçons est d'environ trois mètres. Ainsi, l'assemblage de plusieurs tronçons permet de former un chemin de câbles adapté aux parcours des câbles. L'assemblage est réalisé par exemple au moyen d'une pièce appelée éclisse, se montant à cheval sur deux tronçons de chemin de câbles consécutifs et les maintenant solidaires.

Les tronçons sont montés sur ce qui est communément appelé une console de supportage, comprenant une platine fixée à un pendard et un bras s'élançant en porte à faux à partir de la platine. Le bras peut être agencé parallèlement à une paroi verticale ou un plafond.

Il est connu d'utiliser une pièce de fixation afin de solidariser le tronçon sur le bras. De manière générale, la pièce de fixation comporte des moyens pour fixer la pièce sur le bras et de moyens pour maintenir le tronçon contre le bras.

La fixation du tronçon sur le bras doit répondre à plusieurs contraintes, et notamment elle doit supporter des mouvements relatifs entre le bras et le tronçon chargé par des câbles, ces mouvements étant causés par exemple par des phénomènes de vibrations sismiques, provoquant un décalage entre deux bras successifs et donc des déformations du chemin de câbles.

Généralement, la pièce utilisée est constituée d'une vis et d'un écrou, avec éventuellement une rondelle, voire une contre-rondelle et un contre-écrou.

Le document FR 2 799 518 présente un exemple d'une telle pièce. La pièce comporte un anneau percé en son centre et des (au moins trois) bras, rattachés à l'anneau, portant une languette. Une vis à tige filetée est insérée dans l'anneau pour exercer une force tendant à provoquer l'écartement des bras. Ainsi, en insérant les bras dans un trou d'un bras de console et en les écartant, les languettes bloquent la tige et l'écrou se solidarise du bras. En plaçant une rondelle comportant une patte entre l'anneau et la tête de vis, un fil d'un tronçon chemin de câble est maintenu contre le bras par la patte.

Toutefois, l'utilisation de telles pièces nécessite de manipuler plusieurs éléments de visserie et éventuellement des outils, ce qui peut se révéler fastidieux pour un opérateur, travaillant souvent en hauteur pour mettre en place les chemins de câbles.

Le document EP 1 039 198 dévoile le préambule de la revendication 1 et décrit une pièce de fixation unique dont la mise ne place ne requière ni visserie supplémentaire, ni outils. La pièce comprend une lamelle dont une extrémité se termine par un arrondi et deux ailes formant un V. Entre la lamelle et les ailes, des creux sont destinés à agripper le rebord d'un bras de console comportant des orifices oblongs. Un tronçon en treillis est placé sur le bras de façon à ce que des fils soient perpendiculaires aux orifices. Les ailes sont introduites dans un orifice en déformant l'angle du V tandis que l'arrondi est apposé contre un fil pour le maintenir contre le bras. Lorsque les ailes reprennent leur position naturelle, l'élément se retrouve solidaire du bras.

Néanmoins, afin de mettre en place une telle pièce de fixation, il est nécessaire de maintenir le tronçon en position pour que la pièce puisse être insérée dans l'ouverture du bras pour s'y fixer tout en venant en appui sur un fil du tronçon. Cela requière de la part d'un opérateur de manipuler à la fois le tronçon et la pièce, ce qui peut s'avérer délicat au vu de la taille des tronçons et de la position de l'opérateur (en altitude, à proximité d'une paroi).

La présente invention vise notamment à apporter une solution aux divers problèmes mentionnés ci-dessus.

Un premier objet de l'invention est de proposer une pièce de fixation d'un tronçon de chemin de câbles en treillis de fils sur un bras de console ne nécessitant pas de visserie ni d'outillage supplémentaire.

Un deuxième objet de l'invention est de proposer une pièce de fixation d'un tronçon de chemin de câbles en treillis de fils résistante aux contraintes sismiques.

Un troisième objet de l'invention est de fournir une pièce de fixation d'un tronçon de chemin de câbles en treillis de fils dont la manipulation à la mise en place est simple.

À cet effet, l'invention propose selon un premier aspect une pièce de fixation d'un tronçon de chemin de câbles sur une paroi support selon l'objet de la revendication 1.

La pièce permet ainsi d'assurer la liaison entre la paroi support et un fil de chemin de câbles.

Les deux pattes qui s'étendent, selon l'invention, à l'opposé l'une de l'autre, peuvent ainsi se glisser sous les bords d'une ouverture par une rotation d'un quart de tour.

Les pattes comprennent, selon l'invention, une section linéaire, prolongée par une section en rampe s'écartant de la paroi de jonction, la section linéaire définissant avec le côté inférieur de la paroi de jonction une zone d'insertion de la paroi support, de sorte que la paroi support soit facilement insérée entre les pattes et la paroi de jonction.

Selon l'invention, la paroi de jonction est prolongée par une surface d'appui, de sorte à favoriser le maintien de la pièce sur la paroi support.

La surface d'appui comprend en outre, selon l'invention, une section de mise sous tension par pliage en V, sortant de la surface d'appui, qui augmente les contraintes sur la paroi support pour la maintenir entre les pattes et la paroi de jonction de la pièce.

Les moyens d'encliquetage peuvent comprendre deux bras symétriques,
pourvus d'une section inférieure fixée sur la paroi de jonction et une section supérieure s'élevant au dessus de la paroi de jonction à partir d'un côté supérieur, les bras définissant entre eux une zone de réception pour un fil du tronçon de chemin de câbles. Un fil peut alors être inséré et maintenu entre les bras.

Selon un mode de réalisation, la section supérieure d'un bras comporte une portion extrême, les portions extrêmes des bras étant sensiblement en regard l'une de l'autre. Les portions extrêmes offrent ainsi à la fois une zone d'insertion privilégiée en forme d'entonnoir pour un fil et des moyens pour appuyer le fil contre la paroi de jonction.

Selon un autre mode de réalisation la section supérieure d'un bras comporte une portion extrême pliée à l'opposée de celle de l'autre bras. Entre les deux plis, le fil peut alors être guidé pour s'insérer entre les deux bras.

Avantageusement, la section inférieure d'un bras comprend une portion décrivant un arc de cercle dont l'ouverture est dans la zone de réception, offrant une zone d'articulation pour écarter les bras l'un de l'autre.

Selon un premier mode de réalisation, la section inférieure est reliée à la section supérieure par une section linéaire.

Selon un deuxième mode de réalisation, la section inférieure d'un bras est prolongée par une portion courbe formant une saillie à l'intérieur de la zone de réception, la portion en saillie étant suivie par une portion décrivant un arc de cercle dont l'ouverture est dans la zone de réception, l'arc étant relié à la section supérieure. Les deux bras comprennent ainsi plusieurs zones de déformations pour les écarter l'un de l'autre.

Selon un troisième mode de réalisation, la section inférieure est reliée à la section supérieure par une section formant un angle rentrant dans la zone de réception. Le fil inséré entre les bras peut alors être maintenu latéralement entre les deux angles rentrant.

Selon un deuxième aspect, l'invention propose un ensemble pour le montage d'un tronçon de chemin de câbles comprenant :
- une paroi support munie d'au moins une ouverture oblongue
- une pièce de fixation selon un des modes de réalisation décrits ci-dessus, les pattes étant insérées dans l'ouverture et s'étendant perpendiculairement à l'ouverture, la paroi de jonction étant en appui contre une face supérieure de la paroi support.

Il suffit alors d'amener un tronçon de chemin de câbles par-dessus la pièce pour le solidariser de la paroi support.

Selon un troisième aspect, l'invention propose un procédé d'assemblage d'un tronçon de chemin de câbles sur une paroi support au moyen d'une pièce de fixation telle que décrite ci-dessus, comprenant les étapes suivantes :
- insertion des moyens d'accrochage de la pièce dans une ouverture de la paroi, la paroi de jonction venant en appui sur une face supérieure de la paroi support ;
- blocage de la pièce sur la paroi support.
Le montage de la pièce se fait ainsi indépendamment du tronçon de chemin de câbles.

Selon un quatrième aspect, l'invention propose un procédé d'assemblage d'un tronçon de chemin de câbles sur une paroi support au moyen d'une pièce de fixation comprenant des pattes telles que décrites ci-dessus, le procédé comprenant les étapes suivantes :
- insertion des pattes dans une ouverture oblongue de la paroi support, la paroi de jonction venant en appui sur une face supérieure de la paroi support ;
- blocage par rotation de la pièce d'un quart de tour, les pattes venant en appui sur une face inférieure de la paroi support.

L'assemblage est rapide, simple et ne nécessite pas l'emploi d'outils.

Lorsque le tronçon de chemin de câbles est en treillis de fils, le procédé comprend avantageusement une étape d'encliquetage d'un fil d'un tronçon de chemin de câbles sur la partie supérieure de la pièce bloquée sur la paroi support.

D'autres objets et avantages de l'invention apparaîtront à la lumière de la description faite ci-après en référence aux dessins annexés dans lesquels :
- la figure 1 est une vue en perspective d'une pièce de fixation selon un premier mode de réalisation de moyens d'encliquetage ;
- la figure 2 est une vue de face de la pièce de la figure 1 ;
- la figure 3 est une vue en perspective d'une pièce de , ne faisant pas partie de l'invention, illustrant un deuxième mode de réalisation des moyens d'encliquetage ;
- la figure 4 est une vue de face de la pièce de la figure 3 ;
- la figure 5 est une vue en perspective d'une pièce de fixation selon le deuxième mode de réalisation et une autre réalisation d'une surface d'appui ;
- la figure 6 est une vue de face de la pièce de la figure 5 avec un fil encliqueté ;
- la figure 7 est une vue en perspective d'une pièce de fixation selon un quatrième mode de réalisation des moyens d'encliquetage ;
- la figure 8 est une vue de face de la pièce de la figure 7 ;
- la figure 9 est une vue en perspective d'une pièce de fixation selon un cinquième mode de réalisation des moyens d'encliquetage ;
- la figure 10 est une vue de face de la pièce de la figure 9 ;

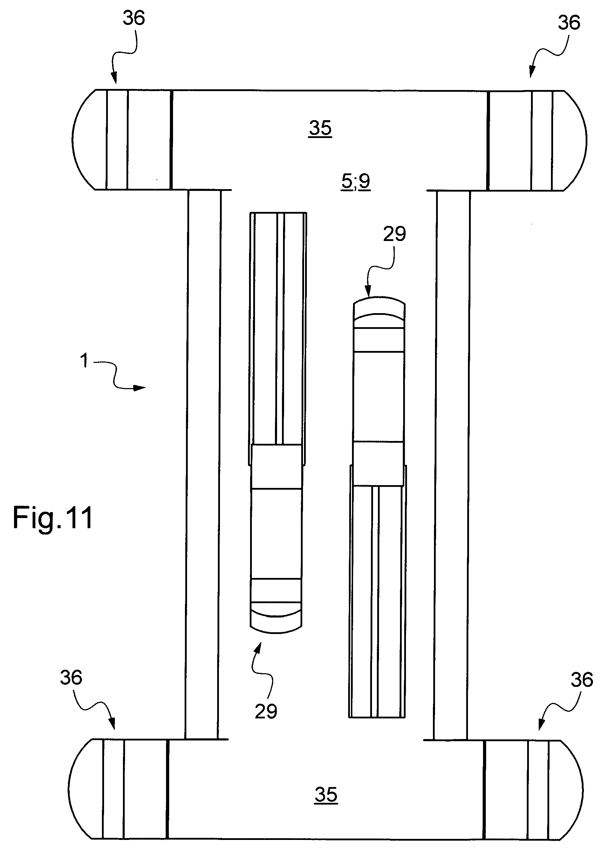

- la figure 11 est une vue de dessous de la pièce de la figure 5 ;

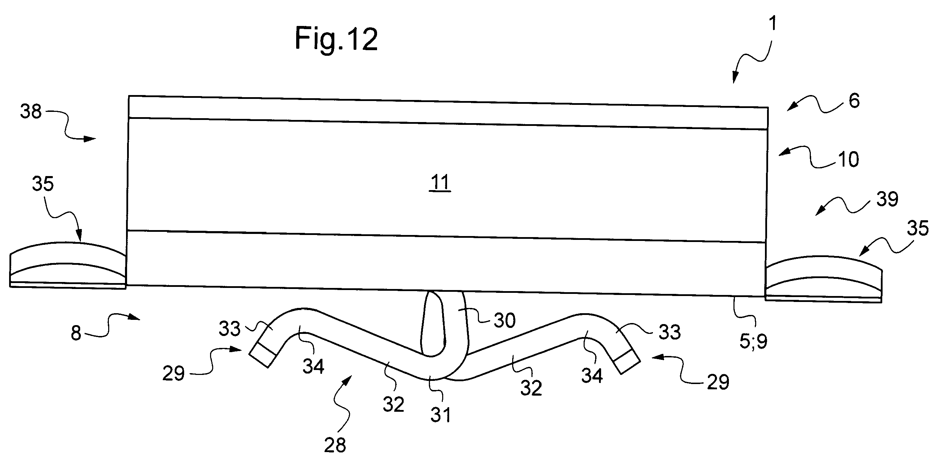

- la figure 12 est une vue latérale de la pièce de la figure 5 ;

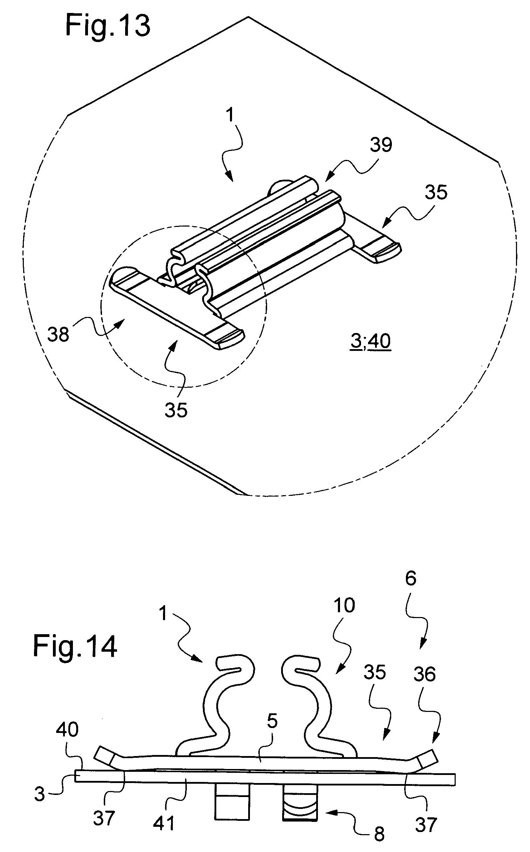

- la figure 13 est une vue en perspective d'une pièce de fixation en appui sur une paroi support sur un bras mais non solidarisée sur le bras ;
- la figure 14 est une vue de détail de face de la pièce de la figure 13
- la figure 15 est une vue de dessous de la pièce de la figure 13 ;
- la figure 16 est une vue de dessous de la pièce de la figure 14 solidarisée sur le bras par rotation d'un quart de tour ;

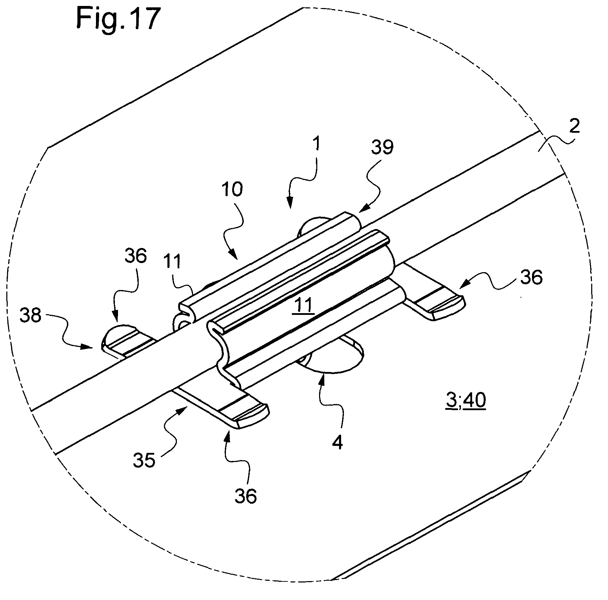

- la figure 17 est une vue en perspective de la pièce de la figure 16 sur laquelle est encliqueté un fil d'un tronçon de chemin de câbles en treillis de fils.

En référence aux figures, il est représenté une pièce 1 de fixation d'un tronçon de chemin de câbles, par exemple en treillis de fils 2, sur une paroi 3 support.

La paroi 3 support comprend une ouverture 4 oblongue. En pratique, la paroi 3 support est par exemple une portion d'une face d'un bras de console, lequel est pourvu sur cette face de plusieurs ouvertures oblongues, réparties régulièrement sur la surface.

La pièce 1 comprend une paroi 5 de jonction, de préférence sensiblement plane, une partie 6 supérieure sur un côté 7 supérieur de la paroi 5 de jonction et une partie 8 inférieure sur un côté 9 inférieur opposé au côté 7 supérieur de la paroi 5 de jonction.

A des fins de meilleure compréhension de la description, il est défini pour la suite les orientations suivantes, ceci n'impliquant aucune orientation limitative des pièces de fixation montées sur leur support :
- horizontale : toute direction parallèle au plan de la paroi 5 de jonction ;
- verticale : toute direction perpendiculaire à la paroi 5 de jonction ;
- haut : sens d'un vecteur vertical qui, partant de la paroi 5 de jonction, pointe du côté 7 supérieur ;
- bas : sens d'un vecteur vertical qui, partant de la paroi 5 de jonction, pointe du côté 9 inférieur.

La partie 6 supérieure comporte des moyens 10 d'encliquetage d'un fil 2 d'un tronçon de chemin de câbles, de sorte que le fil 2 est retenu par forçage sur la partie 6 supérieure.

Selon un mode de réalisation préféré, les moyens 10 d'encliquetage comprennent deux bras 11, distants l'un de l'autre, définissant ainsi entre eux une zone 12 de réception du fil 2 du tronçon de chemin de câbles en treillis de fils, cette zone s'étendant suivant une direction longitudinale.

Par longitudinale, on désigne ici une direction horizontale comprise entre les deux bras.

Les deux bras 11 s'élèvent à partir de la paroi 5 de jonction autour d'un axe moyen sensiblement vertical, de sorte que la zone 12 de réception est ouverte vers le haut. Les deux bras 11 sont symétriques l'un de l'autre selon un plan vertical. Les bras 11 présentent une élasticité localisée sur certaines portions, dépendamment du mode de réalisation, comme cela est expliqué plus loin.

L'élasticité est ici l'aptitude d'un matériau à se déformer sans rupture sous l'action d'une force et à revenir dans un état initial en l'absence de force.

Ainsi, grâce à son élasticité, un élément peut prendre deux positions :
- une position au repos, dans laquelle il n'est pas déformé car soumis à aucune force ;
- une position sous tension, dans laquelle il est déformé et empêché de reprendre la position au repos par l'application d'une force.

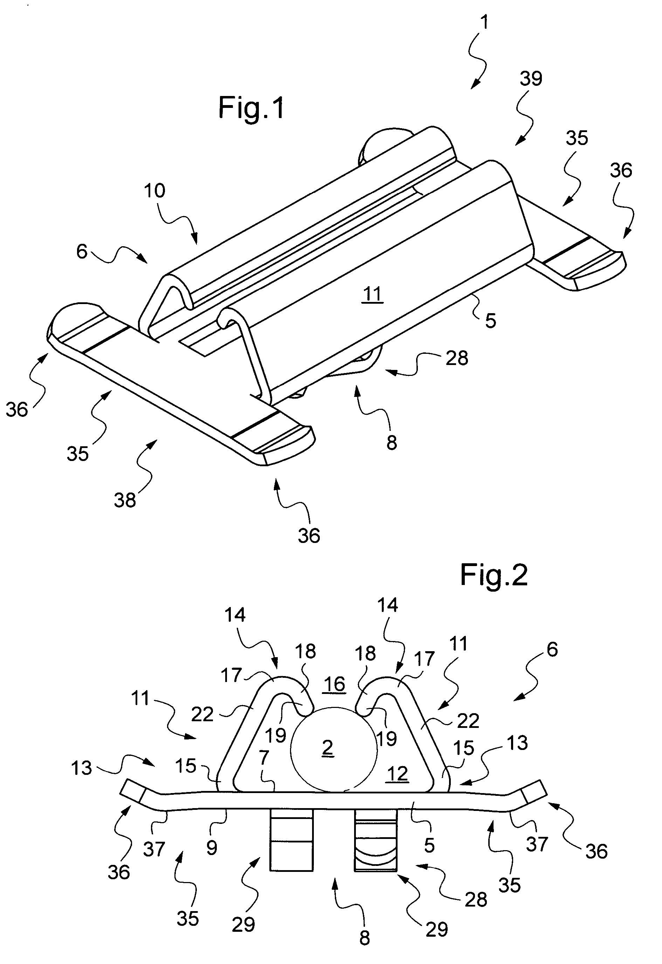

On se rapporte tout d'abord aux figures 2, 4, 6 et 8. La pièce 1 y est représentée en coupe verticale transversale de façon à illustrer sa section transversale.

Les bras 11 comprennent une section 13 inférieure fixée à la surface de jonction et une section 14 supérieure.

La section 13 inférieure des bras 11 permet de les articuler par élasticité par rapport à la paroi 5 de jonction. A cette fin, la section 13 inférieure comprend par exemple une portion 15 en arc de cercle dont l'ouverture est dans la zone 12 de réception, l'arc décrivant un angle inférieur ou égal à 180°. En d'autres termes, sur les deux bras 11, les deux sections 13 inférieures sont ouvertes l'une vers l'autre. La forme en arc de cercle confère une amorce d'articulation sur les bras 11 permettant de les mettre sous tension : les bras 11 pivotent autour de la portion 15 en arc, et ainsi s'écartent l'un de l'autre.

Les sections 14 supérieures des bras définissent une zone 16 d'introduction du fil 2 du tronçon de chemin de câbles, et à cet effet la section 14 supérieure d'un bras 11 comporte une portion dont la distance par rapport à la portion symétrique sur l'autre bras 11 est inférieure ou égale au diamètre du fil 2.

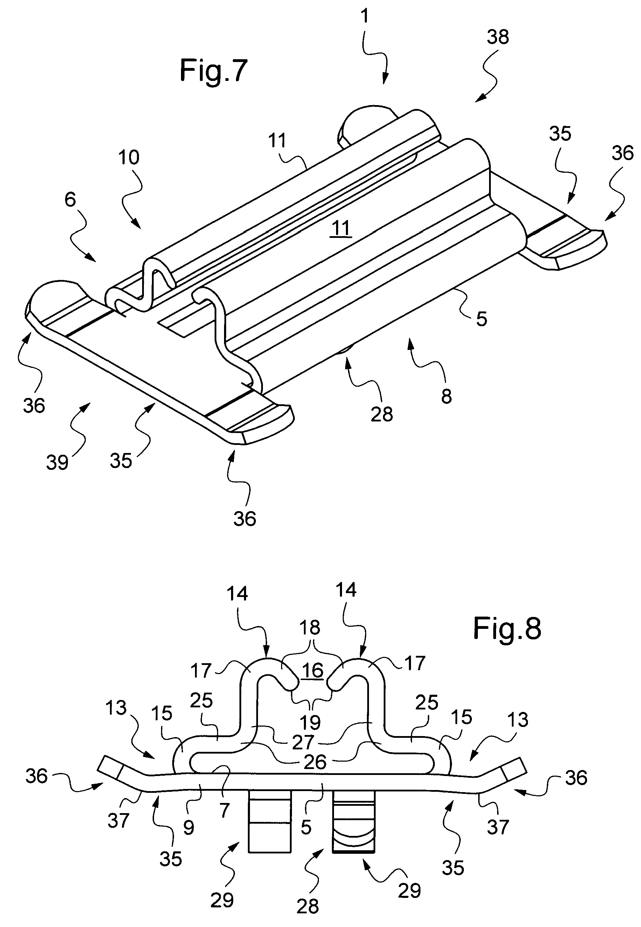

Selon un mode de réalisation (figures 2 et 8), la section 14 supérieure d'un bras 11 comporte une portion 17 courbe prolongée par une portion 18 extrême s'étendant vers celle de l'autre bras 11 et vers le bas, les deux portions 18 extrêmes se trouvant en regard l'une de l'autre et formant ainsi une zone d'introduction en entonnoir. La distance au repos entre les extrémités 19 des deux portions 18 extrêmes est inférieure au diamètre du fil 2.

Lorsque le fil 2 est amené contre les portions 17 courbes, il est guidé dans la zone d'introduction 6 en forme d'entonnoir et force les portions 18 extrêmes à s'écarter pour le laisser passer. L'écartement suffisant est obtenu par le pivotement des portions 18 extrêmes autour de la section 17 courbe ainsi que de l'ensemble du bras 11 autour de la section 13 inférieure. Une fois que le fil 2 est passé de la zone 16 d'introduction dans la zone 12 de réception, les portions 18 extrêmes, et les deux bras 11 en général, tendent à revenir par élasticité dans leur position de repos, bloquant la sortie du fil 2.

De préférence, la distance entre les extrémités 19 des bras 11 au repos et la paroi 5 de jonction est inférieure ou égale au diamètre du fil 2, de sorte que lors de la mise sous tension, le fil 2 dans la zone 12 de réception est coincé entre les extrémités 19 qui tendent à revenir dans leur position initiale et la paroi 5 de jonction.

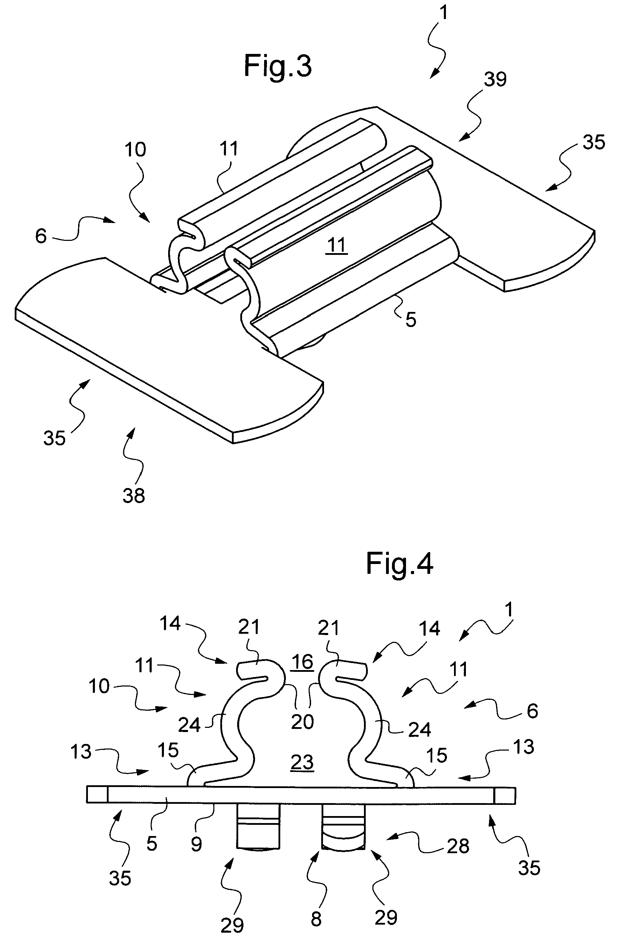

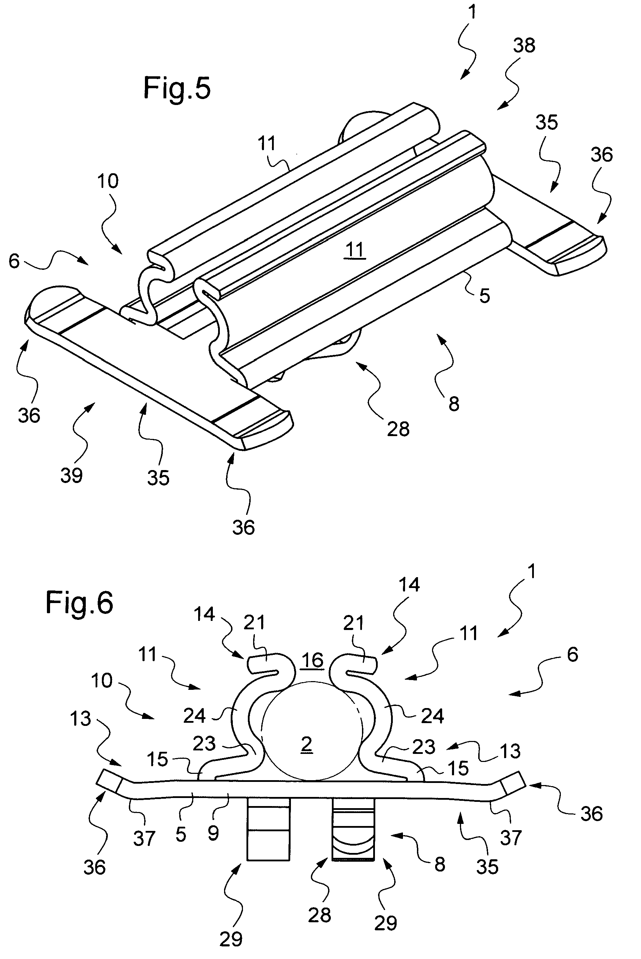

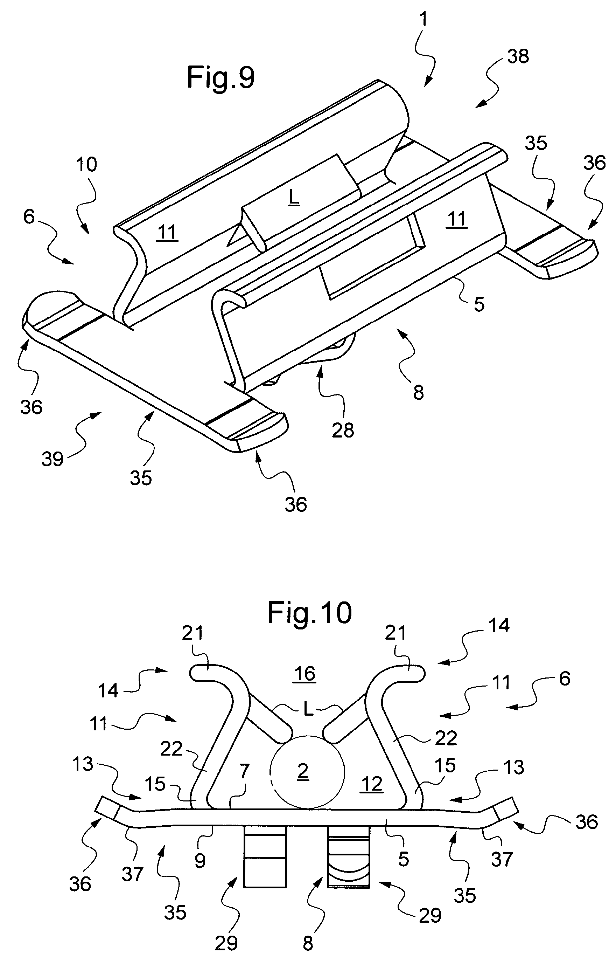

Selon un mode de réalisation (figures 4 et 6), la section 14 supérieure d'un bras comporte une portion 20 courbe prolongée par une portion 21 extrême s'étendant à l'opposé de son symétrique sur l'autre bras. Lorsque les bras 11 sont au repos, les portion 20 courbes sont à une distance, mesurée horizontalement, l'une de l'autre inférieure au diamètre du fil 2 et forment entre elles la zone 16 d'introduction du fil 2 dans la zone 12 de réception. Des languettes L (figures 9 et 10) inclinées l'une vers l'autre et vers le bas dans la zone 16 d'introduction peuvent également être ajoutées sur les sections 14 supérieures, formant un entonnoir.

Lorsqu'un fil 2 est amené contre les portions 20 courbes des sections 14 supérieures, les bras 11 sont forcés à s'écarter et mis sous tension, grâce à l'élasticité de leur section 13 inférieure, pour que la distance entre les portions 20 courbes devienne légèrement supérieure à celle du diamètre du fil 2. Les languettes L se déforment pour s'écarter et le fil 2 passe de la zone 16 d'introduction dans la zone 12 de réception, puis, les bras 11 tendant à revenir dans leur position au repos, les portions 20 courbes se rapprochent de nouveau, empêchant le fil 2 de ressortir de la zone 12 de réception, les languettes L assurant de surcroît le blocage du fil 2 dans la zone 12 de réception.

La section 13 inférieure d'un bras est reliée à la section 14 supérieure par une section intermédiaire.

Selon un premier mode de réalisation (figures 1 et 2 et figures 9 et 10), la section intermédiaire comprend une portion 22 linéaire partant tangentiellement de la section 13 inférieure pour rejoindre tangentiellement également la section 14 supérieure. De préférence, la portion 22 linéaire d'un bras 11 est inclinée à partir de la paroi 5 de jonction vers l'autre bras 11.

Selon un deuxième mode de réalisation (figures 3 à 6), la section intermédiaire comprend une première portion 23 courbe prolongeant tangentiellement la section 13 inférieure, formant une saillie à l'intérieur de la zone 12 de réception. Une deuxième portion 24 courbe prolongeant tangentiellement la première 23 décrit un arc de cercle, dont l'ouverture est dans la zone 12 de réception, et rejoint tangentiellement la section 14 supérieure. La distance entre les deux portions 23 en saillie est de préférence inférieure au diamètre du fil 2.

Le fil 2 inséré dans la zone 12 de réception force les deux portions 23 en saillie à s'écarter par pivotement de la section 13 inférieure. Par rappel élastique, le fil 2 est ainsi coincé horizontalement entre les deux portions 23 en saillie, en plus d'être coincé contre la paroi 5 de jonction par la section 14 supérieure.

La deuxième portion 24 courbe fournit une zone supplémentaire élastique pour l'écartement de la section 14 supérieure par rotation autour de l'arc qu'elle décrit.

Selon un troisième mode de réalisation (figures 7 et 8), la section intermédiaire forme un angle rentrant dans la zone 12 de réception. Lorsque les bras 11 sont au repos, cet angle est par exemple droit : la section intermédiaire comprend une première portion 25 linéaire sensiblement horizontale et s'étendant à partir de la section 13 inférieure vers l'autre bras 11, une portion 26 courbe partant tangentiellement de la première portion 25 linéaire pour rejoindre tangentiellement également une portion 27 linéaire verticale s'étendant vers le haut. La distance entre les deuxièmes portions 27 linéaires des deux bras 11 au repos est de préférence inférieure au diamètre du fil 2.

Ainsi, lorsque le fil 2 est inséré dans la zone 12 de réception et poussé par la section 14 supérieure contre la surface 14 de jonction, il force les deuxièmes portions 27 linéaires de la section intermédiaire à s'écarter par pivotement autour de la section 26 courbe pour venir se loger entre elles. Le fil 2 est coincé entre les sections 26 courbes qui le maintiennent bloqué horizontalement.

La partie 13 inférieure de la pièce 1 de fixation comprend des moyens 28 d'accrochage de la pièce 1 sur la paroi 3 support.

Selon l'invention, les moyens 28 d'accrochage comprennent deux pattes 29 élastiques identiques, s'étendant à partir du côté 9 inférieur de la surface de jonction dans deux directions sensiblement horizontales opposées. Les pattes 29 sont par exemple obtenues en découpant dans la paroi 5 de jonction deux lamelles et en les pliant.

Selon le mode de réalisation représenté sur les figures, les pattes 29 s'étendent longitudinalement, mais ce mode de réalisation n'est pas limitatif, et les pattes peuvent prendre n'importe quelle position par rapport à la direction longitudinale. Les pattes 29 peuvent s'étendre chacune suivant deux droites parallèles à distance l'une de l'autre, de sorte que les pattes sont décalées l'une par rapport à l'autre. En variante, les pattes 29 peuvent être alignées, dans le prolongement l'une de l'autre. La longueur mesurée entre les extrémités des deux pattes 29 est inférieure à la longueur de l'ouverture 4 oblongue.

Une patte 29 comprend une première section 30 linéaire, s'étendant vers le bas, dont la dimension mesurée verticalement est supérieure ou égale à l'épaisseur de la paroi 3 support. Une première section 31 courbe décrivant un angle supérieur ou égal à 90° relie tangentiellement la première section 30 linéaire à une deuxième section 32 linéaire. Ainsi, la distance entre la deuxième section 32 et le côté 9 inférieur de la paroi 5 de jonction, mesurée sur l'extrémité de la deuxième section 32 reliée à la première section 31 courbe, est supérieure ou égale à la même distance mesurée sur l'extrémité opposée de la deuxième section 32 linéaire.

La deuxième section 32 linéaire est prolongée par une troisième section 33 sensiblement linéaire s'écartant de la paroi 5 de jonction, formant une rampe.

Une deuxième section 34 courbe décrivant un angle inférieur ou égal à 90° relie la deuxième section linéaire à la troisième. Cette deuxième section courbe, lorsque les pattes sont au repos, définit avec le côté 9 inférieur la paroi 5 de jonction une distance inférieure à l'épaisseur de la paroi 3 support.

Selon l'invention, la paroi 5 de jonction est prolongée dans son plan par une surface 35 d'appui s'étendant autour des moyens 10 d'encliquetage. Sur la surface d'appui, une section 36 de mise en tension est formée par pliage en V dont la pointe sort de la surface 35 d'appui vers le bas, pour que la pointe dépasse du plan de la surface 35 d'appui. Selon un mode de réalisation préféré et représenté sur les figures, la surface 35 d'appui s'étend du côté d'une face 38 avant et du côté d'une face 39 arrière des moyens 10 d'encliquetage, les faces 38, 39 avant et arrière étant définies selon la direction longitudinale de la pièce 1. De chaque côté, la surface 35 d'appui comporte sur les deux bords libres opposés, et selon l'invention, deux portions pliées en V pour former la section 36 de mise sous tension.

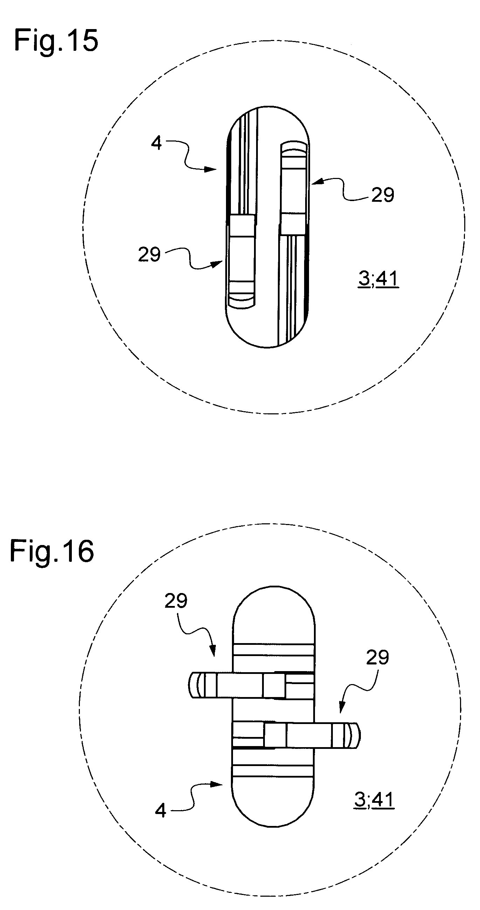

Pour accrocher la pièce 1 sur la paroi support, les pattes 29 sont placées parallèlement à la direction de l'ouverture 4 oblongue et sont insérées dans l'ouverture 4 (figure 15), la pointe 37 du V de la surface 35 d'appui vient en appui contre une face 40 supérieure de la paroi 3 support. La pièce 1 est pivotée, la paroi 3 support glisse le long de la section 33 en rampe des pattes 29, et écarte les pattes 29 du côté 9 inférieur de la paroi 5 de jonction, de façon à s'insérer entre les pattes 29 et la paroi 5 de jonction. A cette fin, les pattes 29 pivotent autour de leur première section 31 courbe par élasticité, tout en forçant la pointe 37 du V à revenir dans le plan de la surface 35 d'appui, de sorte que la paroi 5 de jonction vienne en appui contre la face 40 supérieure de la paroi 3 support. On obtient ainsi une double mise sous tension, à savoir la mise sous tension des pattes 29 par écartement et la mise sous tension de la surface 35 d'appui par appui sur la pointe 37 du V. Lorsque la pièce 1 a pivoté d'un quart de tour (figure 16), les pattes 29 se retrouvent perpendiculaires à l'ouverture 4 oblongue, et la deuxième section 34 courbe est en appui contre une face 41 inférieure de la paroi 3 support.

En variante, les pattes 29 peuvent être légèrement pivotées autour de leur direction d'extension, de sorte que la distance entre une patte 29 et le côté 9 inférieur de la paroi 5 de jonction diminue dans la direction perpendiculaire à la direction d'extension de la patte 29. Ainsi, lors du pivotement de la pièce 1 sur la paroi 3 support, les pattes 29 viennent en serrage progressif.

La paroi 3 support se retrouve ainsi coincée entre les pattes 29 qui tendent à revenir dans leur position initiale par élasticité et la paroi 5 de jonction qui tend à reformer la section 36 en V.

La pièce 1 ainsi réalisée permet par exemple de monter un tronçon de chemin de câbles sur un bras de console muni sur une face d'ouvertures oblongues.

A cet effet, plusieurs pièces 1 sont préalablement accrochées sur le bras muni d'ouvertures oblongues. Puis un tronçon est amené par-dessus le bras et est encliqueté par forçage.

Le chemin de câbles est par exemple en treillis de fils, de sorte qu'un fil 2 est encliqueté entre les bras 11 des moyens 10 d'encliquetage. Le fil 2 peut être un fil de chaîne du treillis, de sorte que la direction longitudinale de la pièce 1 est confondue avec la direction longitudinale du chemin de câbles, mais le fil 2 peut également être un fil de trame, de sorte que les deux directions longitudinales, du chemin de câbles et de la pièce 1, sont perpendiculaires.

Toutefois, le mode de réalisation des chemins de câbles n'est pas limité au treillis de fils. Ainsi, les moyens 10 d'encliquetage peuvent être adaptés à tout type de chemin de câbles. Par exemple, selon un mode de réalisation non représenté, le chemin de câbles est en tôle perforée, et les moyens 10 d'encliquetage comprennent sur leur partie supérieure un bulbe de diamètre supérieur à celui des perforations du chemin de câbles. Ainsi, le chemin de câbles peut être encliqueté par l'insertion forcée du bulbe dans les perforations.

La distance entre les pièces 1 est choisie en fonction des dimensions du tronçon de chemin de câbles. Cette distance peut être facilement ajustée en faisant glisser la pièce dans l'ouverture 4 oblongue.

La pièce 1 de fixation est réalisée par exemple à partir d'une plaque d'épaisseur de l'ordre du millimètre, voire inférieure, par exemple de 0,8 mm. La plaque est découpée et pliée pour former les bras 11 et les pattes 29. La plaque est par exemple en métal ou en alliage, ou encore en plastique.

Le chemin de câbles est ainsi maintenu solidairement contre le bras de console.

Le montage du chemin de câbles se fait facilement, sans outils, uniquement par forçage.

Les tronçons de chemin de câbles peuvent également être retirés par exemple en cas de défectuosité simplement en tirant dessus pour faire sortir les fils des moyens d'encliquetage.

La pièce 1 peut être adaptée sur tous les bras de console indépendamment de leur position (par exemple verticale, horizontale ou à proximité d'une paroi).

Les moyens 10 d'encliquetage assure au chemin de câbles de rester solidaire du bras, que le chemin de câbles soit encliqueter aussi bien par-dessus que par-dessous le bras, voire même en regard d'une paroi verticale.

## Revendications

1. Pièce (1) de fixation d'un tronçon de chemin de câbles sur une paroi (3) support, la pièce (1) comportant deux parties (6, 8) réparties de part et d'autre d'une paroi (5) de jonction :
- une partie (6) supérieure comprenant des moyens (10) d'encliquetage du tronçon de chemin de câbles sur la pièce (1) ;
- une partie (8) inférieure comprenant des moyens (28) d'accrochage de la pièce (1) sur la paroi (3) support ;
la pièce étant **caractérisée en ce que** les moyens (28) d'accrochage comprennent au moins deux pattes (29) élastiques s'étendant d'un côté (9) inférieur de la paroi (5) de jonction, suivant une direction parallèle à la paroi (5) de jonction, la paroi (5) de jonction étant par ailleurs prolongée par une surface (35) d'appui comprenant une section (36) de mise sous tension par pliage en V, la dite section (36) de mise sous tension coopérant avec les pates (29) pour bloquer la pièce sur la paroi (3) support, les deux pattes (29) élastiques s'étendant à l'opposé l'une de l'autre, chaque patte (29) élastique comprenant
- une première section (30) linéaire,
- une deuxième section (32) linéaire,
- une section (31) courbe assurant la jonction entre la première section (30) et la deuxième section (32),
la section courbe reliant la première section (30) à la deuxième section (32), les pattes (29) pivotant autour de leur première section (30) par élasticité.

2. Pièce (1) de fixation selon la revendication 1, dans laquelle la deuxième section (32) linéaire est prolongée par une section (33) en rampe s'écartant de la paroi (5) de jonction et définit avec le côté (9) inférieur de la paroi (5) de jonction une zone d'insertion de la paroi (3) support.

3. Pièce (1) de fixation selon l'une des revendications 1 à 2, dans laquelle les moyens (10) d'encliquetage comprennent deux bras (11) symétriques, pourvus d'une section (13) inférieure fixée sur la paroi (5) de jonction et une section (14) supérieure s'élevant au-dessus de la paroi (5) de jonction à partir d'un côté (7) supérieur, les bras (11) définissant entre eux une zone (12) de réception pour un fil (2) du tronçon de chemin de câbles.

4. Pièce (1) de fixation selon la revendication 3, dans laquelle la section (14) supérieure d'un bras (11) comporte une portion (21) extrême pliée à l'opposée de celle de l'autre bras (11).

5. Pièce (1) de fixation selon l'une des revendications 3 ou 4, dans laquelle la section (13) inférieure d'un bras (11) comprend une portion (15) décrivant un arc de cercle dont l'ouverture est dans la zone (12) de réception.

6. Pièce (1) de fixation selon l'une des revendications 3 ou 4, dans laquelle la section (13) inférieure est reliée à la section (14) supérieure par une section (22) linéaire.

7. Pièce (1) de fixation selon l'une des revendications 3 ou 4, dans laquelle la section (13) inférieure d'un bras (11) est prolongée par une portion (23) courbe formant une saillie à l'intérieur de la zone (12) de réception, la portion (23) en saillie étant suivie par une portion (24) décrivant un arc de cercle dont l'ouverture est dans la zone (12) de réception, l'arc (24) étant relié à la section (14) supérieure.

8. Pièce (1) de fixation selon l'une des revendications 3 ou 4, dans laquelle la section (13) inférieure est reliée à la section (14) supérieure par une section formant un angle rentrant dans la zone (12) de réception.

9. Ensemble pour le montage d'un tronçon de chemin de câbles comprenant :
- une paroi (3) support munie d'au moins une ouverture (4) oblongue
- une pièce (1) de fixation selon l'une des revendications 1 à 8, les pattes (29) étant insérées dans l'ouverture (4) et s'étendant perpendiculairement à l'ouverture (4), la paroi (5) de jonction étant en appui contre une face (40) supérieure de la paroi (3) support.

10. Procédé d'assemblage d'un tronçon de chemin de câbles sur une paroi (3) support au moyen d'une pièce (1) de fixation selon l'une des revendications 1 à 8, comprenant les étapes suivantes :
- insertion des moyens d'accrochage (29) de la pièce (1) dans une ouverture (4) de la paroi (3) support, la paroi (5) de jonction venant en appui sur une face (40) supérieure de la paroi (3) support ;
- blocage de la pièce (1) sur la paroi (3) support.

11. Procédé d'assemblage d'un tronçon de chemin de câbles sur une paroi (3) support au moyen d'une pièce (1) de fixation selon l'une des revendications 1 à 8, le procédé comprenant les étapes suivantes :
- insertion des pattes (29) dans une ouverture (4) oblongue de la paroi (3) support, la paroi (5) de jonction venant en appui sur une face (40) supérieure de la paroi (3) support ;
- blocage par rotation de la pièce (1) d'un quart de tour, les pattes (29) venant en appui sur une face (41) inférieure de la paroi (3) support.

12. Procédé d'assemblage selon la revendication 10 ou 11, chacune selon l'une des revendications 3 à 8, dans lequel le tronçon de chemin de câbles est en treillis de fils, le procédé comprenant une étape d'encliquetage d'un fil (2) d'un tronçon de chemin de câbles sur la section (14) supérieure de la pièce (1) bloquée sur la paroi (3) support.

## Patentansprüche

1. Befestigungselement (1) eines Abschnitts eines Kabelkanals auf einer Trägerwand (3), wobei das Element (1) zwei Teile (6, 8) aufweist, die beiderseits einer Verbindungswand (5) verteilt sind:
- einen oberen Teil (6), der Rastmittel (10) des Kabelkanals auf dem Element (1) aufweist;
- einen unteren Teil (8), der Einhängemittel (28) des Elements (1) auf der Trägerwand (3) aufweist;
wobei das Element **dadurch gekennzeichnet ist, dass** die Einhängemittel (28) mindestens zwei elastische Laschen (29) aufweisen, die sich auf einer unteren Seite (9) der Verbindungswand (5) in einer Richtung parallel zu der Verbindungswand (5) erstrecken, wobei die Verbindungswand (5) außerdem durch eine Auflagefläche (35) verlängert ist, die einen Abschnitt (36) zum Aufbringen einer Spannung durch V-Falten aufweist, wobei der Abschnitt (36) zum Aufbringen einer Spannung mit den Laschen (29) zusammenwirkt, um das Element auf der Trägerwand (3) zu blockieren,
wobei sich die zwei elastischen Laschen (29) einander gegenüberliegend erstrecken, wobei jede elastische Lasche (29) Folgendes aufweist
- einen ersten linearen Abschnitt (30),
- einen zweiten linearen Abschnitt (32),
- einen gekrümmten Abschnitt (31), der die Verbindung zwischen dem ersten Abschnitt (30) und dem zweiten Abschnitt (32) gewährleistet,
wobei der gekrümmte Abschnitt den ersten Abschnitt (30) mit dem zweiten Abschnitt (32) verbindet, wobei die Laschen (29) durch Elastizität um ihren ersten Abschnitt (30) schwenken.

2. Befestigungselement (1) nach Anspruch 1, wobei der zweite lineare Abschnitt (32) durch einen Rampenabschnitt (33) verlängert ist, der sich von der Verbindungswand (5) entfernt, und mit der unteren Seite (9) der Verbindungswand (5) einen Bereich zum Einfügen der Trägerwand (3) definiert.

3. Befestigungselement (1) nach einem der Ansprüche 1 bis 2, wobei die Rastmittel (10) zwei symmetrische Arme (11) aufweisen, die mit einem unteren Abschnitt (13), der auf der Verbindungswand (5) befestigt ist, und mit einem oberen Abschnitt (14) ausgestattet sind, der sich, ausgehend von einer oberen Seite (7), über der Verbindungswand (5) erhebt, wobei die Arme (11) zwischen sich einen Aufnahmebereich (12) für einen Draht (2) des Abschnitts eines Kabelkanals definieren.

4. Befestigungselement (1) nach Anspruch 3, wobei der obere Abschnitt (14) eines Arms (11) einen Endabschnitt (21) aufweist, der entgegengesetzt zu jenem des anderen Arms (11) gebogen ist.

5. Befestigungselement (1) nach einem der Ansprüche 3 oder 4, wobei der untere Abschnitt (13) eines Arms (11) einen Abschnitt (15) aufweist, der einen Kreisbogen beschreibt, dessen Öffnung sich in dem Aufnahmebereich (12) befindet.

6. Befestigungselement (1) nach einem der Ansprüche 3 oder 4, wobei der untere Abschnitt (13) mit dem oberen Abschnitt (14) durch einen linearen Abschnitt (22) verbunden ist.

7. Befestigungselement (1) nach einem der Ansprüche 3 oder 4, wobei der untere Abschnitt (13) eines Arms (11) durch einen gekrümmten Abschnitt (23) verlängert ist, der im Inneren des Aufnahmebereichs (12) einen Vorsprung bildet, wobei der vorspringende Abschnitt (23) von einem Abschnitt (24) gefolgt ist, der einen Kreisbogen beschreibt, dessen Öffnung sich in dem Aufnahmebereich (12) befindet, wobei der Bogen (24) mit dem oberen Abschnitt (14) verbunden ist.

8. Befestigungselement (1) nach einem der Ansprüche 3 oder 4, wobei der untere Abschnitt (13) mit dem oberen Abschnitt (14) durch einen Abschnitt verbunden ist, der einen Innenwinkel in dem Aufnahmebereich (12) bildet.

9. Anordnung für die Montage eines Abschnitts eines Kabelkanals, umfassend:
- eine Trägerwand (3), die mit mindestens einer länglichen Öffnung (4) ausgestattet ist
- ein Befestigungselement (1) nach einem der Ansprüche 1 bis 8, wobei die Laschen (29) in die Öffnung (4) eingefügt sind und sich senkrecht zu der Öffnung (4) erstrecken, wobei die Verbindungswand (5) gegen eine obere Seite (40) der Trägerwand (3) anliegt.

10. Verfahren zur Montage eines Abschnitts eines Kabelkanals auf einer Trägerwand (3) mit Hilfe eines Befestigungselements (1) nach einem der Ansprüche 1 bis 8, das die folgenden Schritte aufweist:
- Einfügen der Einhängemittel (29) des Elements (1) in eine Öffnung (4) der Trägerwand (3), wobei die Verbindungswand (5) auf einer oberen Seite (40) der Trägerwand (3) zur Anlage kommt;
- Blockieren des Elements (1) auf der Trägerwand (3).

11. Verfahren zur Montage eines Abschnitts eines Kabelkanals auf einer Trägerwand (3) mit Hilfe eines Befestigungselements (1) nach einem der Ansprüche 1 bis 8, wobei das Verfahren die folgenden Schritte aufweist:
- Einfügen der Laschen (29) in eine längliche Öffnung (4) der Trägerwand (3), wobei die Verbindungswand (5) auf einer oberen Seite (40) der Trägerwand (3) zur Anlage kommt;
- Blockieren durch eine Vierteldrehung des Elements (1), wobei die Laschen (29) auf einer unteren Seite (41) der Trägerwand (3) zur Anlage kommen.

12. Verfahren zur Montage nach Anspruch 10 oder 11, jeder nach einem der Ansprüche 3 bis 8, wobei der Abschnitt eines Kabelkanals aus Drahtgitter ist, wobei das Verfahren einen Schritt des Einrastens eines Drahtes (2) eines Abschnitts eines Kabelkanals auf dem oberen Abschnitt (14) des Elements (1), das auf der Trägerwand (3) blockiert wird, aufweist.

## Claims

1. Component (1) for fixing a cable tray section on a support wall (3), the component (1) comprising two parts (6, 8) distributed one on either side of a junction wall (5):
- an upper part (6) comprising means (10) for snap-fastening the cable tray section on the component (1);
- a lower part (8) comprising means (28) for attaching the component (1) to the support wall (3);
the component being **characterized in that** the attachment means (28) comprise at least two elastic tabs (29) extending on a lower side (9) of the junction wall (5), along a direction parallel to the junction wall (5), the junction wall (5) being moreover extended by a bearing surface (35) comprising a section (36) for tensioning by folding in a V shape, said tensioning section (36) cooperating with the tabs (29) in order to immobilize the component on the support wall (3), the two elastic tabs (29) extending oppositely from one another, each elastic tab (29) comprising
- a first linear section (30),
- a second linear section (32),
- a curved section (31) providing the junction between the first section (30) and the second section (32),
the curved section connecting the first section (30) to the second section (32), the tabs (29) pivoting about their first section (30) by elasticity.

2. Fixing component (1) according to Claim 1, in which the second linear section (32) is extended by a ramp section (33) moving away from the junction wall (5) and defines, with the lower side (9) of the junction wall (5), an insertion region for the support wall (3).

3. Fixing component (1) according to either of Claims 1 and 2, in which the snap-fastening means (10) comprise two symmetrical arms (11) provided with a lower section (13) fixed to the junction wall (5) and an upper section (14) rising above the junction wall (5) from an upper side (7), the arms (11) defining between them a reception region (12) for a wire (2) of the cable tray section.

4. Fixing component (1) according to Claim 3, in which the upper section (14) of one arm (11) comprises an end portion (21) folded oppositely to that of the other arm (11).

5. Fixing component (1) according to either of Claims 3 and 4, in which the lower section (13) of an arm (11) comprises a portion (15) describing an arc of a circle of which the opening is in the reception region (12).

6. Fixing component (1) according to either of Claims 3 and 4, in which the lower section (13) is connected to the upper section (14) by a linear section (22).

7. Fixing component (1) according to either of Claims 3 and 4, in which the lower section (13) of an arm (11) is extended by a curved portion (23) forming a projection inside the reception region (12), the projecting portion (23) being followed by a portion (24) describing an arc of a circle of which the opening is in the reception region (12), the arc (24) being connected to the upper section (14).

8. Fixing component (1) according to either of Claims 3 and 4, in which the lower section (13) is connected to the upper section (14) by a section forming a re-entrant angle in the reception region (12).

9. Assembly for mounting a cable tray section comprising:
- a support wall (3) provided with at least one oblong opening (4),
- a fixing component (1) according to one of Claims 1 to 8, the tabs (29) being inserted into the opening (4) and extending perpendicularly to the opening (4), the junction wall (5) bearing against an upper face (40) of the support wall (3).

10. Method for assembling a cable tray section on a support wall (3) by means of a fixing component (1) according to one of Claims 1 to 8, comprising the following steps:
- inserting the attachment means (29) of the component (1) into an opening (4) of the support wall (3), the junction wall (5) bearing against an upper face (40) of the support wall (3) ;
- immobilizing the component (1) on the support wall (3).

11. Method for assembling a cable tray section on a support wall (3) by means of a fixing component (1) according to one of Claims 1 to 8, the method comprising the following steps:
- inserting the tabs (29) into an oblong opening (4) of the support wall (3), the junction wall (5) bearing against an upper face (40) of the support wall (3);
- immobilizing the component (1) by rotating it through a quarter of a turn, the tabs (29) bearing against a lower face (41) of the support wall (3).

12. Assembly method according to Claim 10 or 11, each according to one of Claims 3 to 8, in which the cable tray section is in the form of a wire lattice, the method comprising a step of snap-fastening a wire (2) of a cable tray section on the upper section (14) of the component (1) immobilized on the support wall (3).
